# EUROPÄISCHE PATENTSCHRIFT

(11) **EP 2 852 519 B1**
(45) Veröffentlichungstag und Bekanntmachung des Hinweises auf die Patenterteilung: **25.05.2016**
(21) Anmeldenummer: 13734082.4
(22) Anmeldetag: 04.07.2013
(51) Int. Cl.: B61L 25/08, G06F 3/01, G06F 3/038

(54) **BEDIENEINRICHTUNG ZUR EINGABE VON BEDIENBEFEHLEN ZUR STEUERUNG EINER TECHNISCHEN ANLAGE**
ACTUATING DEVICE FOR INPUT OF ACTUATING COMMANDS FOR CONTROLLING A TECHNICAL SYSTEM
DISPOSITIF DE COMMANDE PERMETTANT D'ENTRER DES INSTRUCTIONS DE COMMANDE POUR LA GESTION D'UNE INSTALLATION TECHNIQUE

(30) Priorität: 20.07.2012 DE 102012212780
(43) Veröffentlichungstag der Anmeldung: 01.04.2015
(73) Patentinhaber: Siemens Aktiengesellschaft, 80333 München (DE)
(72) Erfinder: BURKHARDT, Marc, 38102 Braunschweig (DE)
(86) Internationale Anmeldenummer: PCT/EP2013/064174
(87) Internationale Veröffentlichungsnummer: WO 2014/012798

(56) Entgegenhaltungen:
- WO-A1-2011/125007
- DE-A1- 4 432 419
- DE-A1-102006 029 851

## Beschreibung

Die Erfindung bezieht sich auf ein Verfahren zum Betreiben einer Bedieneinrichtung, die eine Eingabe von Bedienbefehlen zur Steuerung einer technischen Anlage, insbesondere einer Eisenbahngleisanlage, ermöglicht, wobei auf einer Anzeigeeinrichtung der Bedieneinrichtung der Ist-Zustand zumindest eines Abschnitts der technischen Anlage angezeigt wird und eingehende bedienerseitige Bedienbefehle zum Umstellen von Komponenten der technischen Anlage bearbeitet werden.

Ein derartiges Verfahren ist beispielsweise aus der deutschen Offenlegungsschrift DE 10 2006 029 851 A1 bekannt. Bei diesem Verfahren wird nach der Eingabe eines Bedienbefehls überprüft, in welchem Zustand sich die vom Bedienbefehl betroffene Komponente befindet und ob eine Umstellung möglich ist. Falls dies der Fall ist, wird eine erneute Eingabe erwartet, die mit der ersten Eingabe, also dem Bedienbefehl, verglichen wird. Nur wenn beide Eingaben inhaltlich übereinstimmen und der vom Bedienbefehl gewünschte Zustand der Komponente eingenommen werden kann, kommt es zu dem gewünschten Umstellen. Durch das Erfordernis einer Bestätigung der Bedienbefehle wird die Gefahr von Fehlbedienungen reduziert.

Weiterhin ist aus der Druckschrift WO 2011/125007 A1 ein Verfahren zum Betreiben einer Bedieneinrichtung, die eine Eingabe von Bedienbefehlen zur Steuerung einer technischen Anlage in Form von Roboterarmen eines Operationssystems ermöglicht, bekannt, bei dem auf einer Anzeigeeinrichtung der Bedieneinrichtung der Ist-Zustand zumindest eines Abschnittes der technischen Anlage angezeigt wird und eingehende bedienerseitige Bedienbefehle zum Umstellen von Komponenten der technischen Anlage bearbeitet werden. Dabei wird mit einer Blickerfassungseinrichtung festgestellt, ob die Bedienperson den vom Bedienbefehl betroffenen Abschnitt der technischen Anlage auf der Anzeigeeinrichtung anschaut. Ist dies nicht der Fall, so sendet die Blickerfassungseinrichtung ein Kommando, das die Bewegung der Roboterarme sperrt.

Ausgehend hiervon liegt der Erfindung die Aufgabe zugrunde, ein Verfahren zum Betreiben einer Bedieneinrichtung anzugeben, bei dem das Risiko von Fehlbedienungen noch weiter reduziert wird.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass nach Eingabe des bedienerseitigen Bedienbefehls geprüft wird, ob die Bedienperson den vom Bedienbefehl betroffenen Abschnitt der technischen Anlage anschaut, falls dies der Fall ist, eine Bestätigungsaufforderung erzeugt wird, mit der die Bedienperson zur Bestätigung des Bedienbefehls aufgefordert wird, und die Umsetzung des Bedienbefehls zumindest auch erfordert, dass die Bedienperson nach der Bestätigungsaufforderung den Bedienbefehl bestätigt hat.

Ein wesentlicher Vorteil des erfindungsgemäßen Verfahrens ist darin zu sehen, dass sich damit feststellen lässt, ob die Bedienperson den Bedienbefehl bewusst und zielgerichtet erzeugt hat und sich über die Konsequenzen des Bedienbefehls bewusst zu sein scheint. Die Gefahr einer Fehlbedienung bzw. die Gefahr einer Eingabe nicht gewollter Bedienbefehle lässt sich somit deutlich reduzieren.

Vorzugsweise wird die Bestätigungsaufforderung erst erzeugt, wenn die Betrachtungszeitdauer des oder der vom Bedienbefehl betroffenen Abschnitte der technischen Anlage eine vorgegebene Mindestzeitdauer erreicht oder überschritten hat.

Um der Bedienperson zu signalisieren, welche Blickrichtung die Blickerfassungseinrichtung ermittelt hat, wird der von dem Blick der Bedienperson erfasste Abschnitt der Anzeigeeinrichtung vorzugsweise mittels eines Blickrichtungssymbols auf der Anzeigeeinrichtung markiert.

Die Bearbeitung des Bedienbefehls wird bevorzugt abgebrochen, wenn nach Eingabe des bedienerseitigen Bedienbefehls die Bedienperson den vom Bedienbefehl betroffenen Abschnitt der technischen Anlage innerhalb einer vorgegebenen Zeitspanne nicht oder nicht ausreichend lang - also z. B. kürzer als eine vorgegebene Mindestzeitdauer - angeschaut hat.

Die Erfindung bezieht sich darüber hinaus auf eine Bedieneinrichtung zur Eingabe von Bedienbefehlen zur Steuerung einer technischen Anlage, insbesondere einer Eisenbahngleisanlage, mit einer Anzeigeeinrichtung, auf der der Ist-Zustand zumindest eines Abschnitts der technischen Anlage angezeigt wird oder anzeigbar ist, und einer Eingabeeinrichtung, die eine bedienerseitige Eingabe von Bedienbefehlen ermöglicht, und einer Steuereinrichtung zum Bearbeiten der Bedienbefehle und einer Blickerfassungseinrichtung.

Erfindungsgemäß ist vorgesehen, dass die Steuereinrichtung, die mit der Blickerfassungseinrichtung in Verbindung steht und von dieser ein die Blickrichtung angebendes Blickrichtungssignal erhält, eine Rechnereinrichtung aufweist, die derart programmiert ist, dass sie nach Eingabe des bedienerseitigen Bedienbefehls anhand des Blickrichtungssignals der Blickerfassungseinrichtung prüft, ob die Bedienperson den vom Bedienbefehl betroffenen Abschnitt der technischen Anlage anschaut, falls dies der Fall ist, eine Bestätigungsaufforderung erzeugt, mit der die Bedienperson zur Bestätigung des Bedienbefehls aufgefordert wird und ein Steuersignal zur Umsetzung des Bedienbefehls nur dann erzeugt, wenn die Bedienperson nach der Bestätigungsaufforderung den Bedienbefehl bestätigt hat.

Bezüglich der Vorteile der erfindungsgemäßen Bedieneinrichtung sei auf die obigen Ausführungen im Zusammenhang mit dem erfindungsgemäßen Verfahren verwiesen, da die Vorteile des erfindungsgemäßen Verfahrens denen der erfindungsgemäßen Bedieneinrichtung im Wesentlichen entsprechen.

Gemäß einer besonders bevorzugten Ausgestaltung der Bedieneinrichtung ist vorgesehen, dass die Steuereinrichtung das Blickrichtungssignal auswertet und prüft, ob die Bedienperson vor, während oder nach der Eingabe eines Bedienbefehls den vom Bedienbefehl betroffenen Abschnitt der technischen Anlage auf der Anzeigeeinrichtung angeschaut hat oder anschaut.

Vorzugsweise wird die Steuereinrichtung die Weiterbearbeitung des Bedienbefehls und/oder die Umsetzung des Bedienbefehls verweigern, wenn sie anhand des Blickrichtungssignals feststellt, dass die Bedienperson den vom Bedienbefehl betroffenen Abschnitt in unzureichendem Maße - also z. B. kürzer als eine vorgegebene Mindestzeitdauer - anschaut oder angeschaut hat.

Vorzugsweise ist die Steuereinrichtung derart ausgestaltet, dass sie den von dem Blick der Bedienperson erfassten Abschnitt der Anzeigeeinrichtung mittels eines Blickrichtungssymbols auf der Anzeigeeinrichtung markiert.

Die Erfindung wird nachfolgend anhand von Ausführungsbeispielen näher erläutert; dabei zeigen beispielhaft
- Figur 1: ein Ausführungsbeispiel für eine erfindungsgemäße Bedieneinrichtung, anhand derer auch das erfindungsgemäße Verfahren beispielhaft erläutert wird,
- Figur 2: die Bedieneinrichtung gemäß Figur 1, nachdem die Bearbeitung eines von einer Bedienperson der Bedieneinrichtung eingegebenen Bedienbefehls abgebrochen wurde,
- Figur 3: die Bedieneinrichtung gemäß Figur 1 zu einem Zeitpunkt, zu dem der Blick einer Bedienperson der Bedieneinrichtung auf den von einem Bedienbefehl betroffenen Abschnitt der Eisenbahngleisanlage gerichtet ist, und
- Figur 4: die Bedieneinrichtung gemäß Figur 1, nachdem eine Steuereinrichtung der Bedieneinrichtung eine Bestätigungsaufforderung erzeugt hat.

In den Figuren werden der Übersicht halber für identische oder vergleichbare Komponenten stets dieselben Bezugszeichen verwendet.

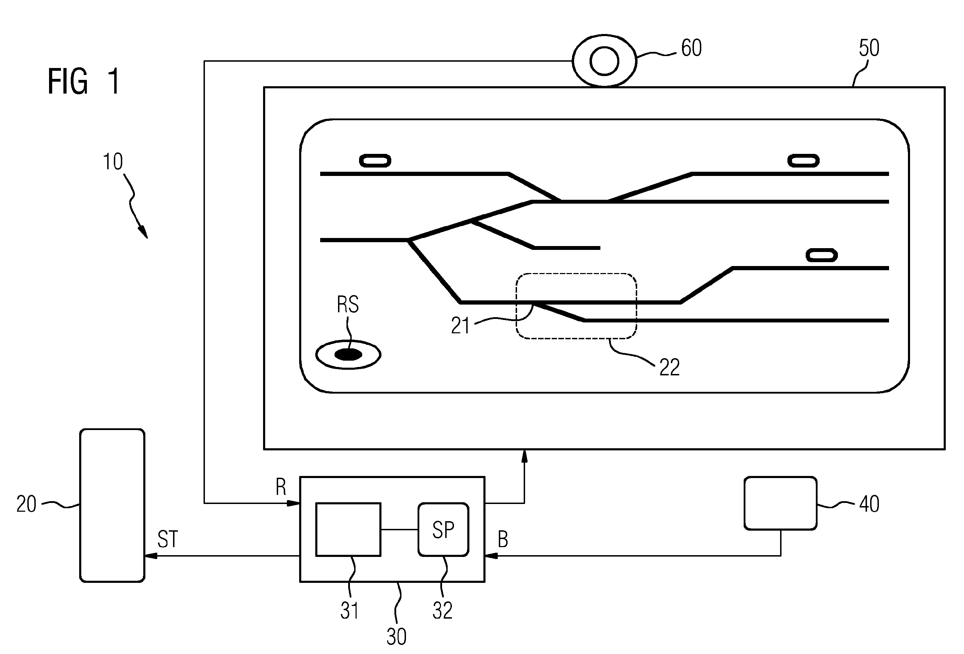

Die Figur 1 zeigt eine Bedieneinrichtung 10, mit der sich Steuersignale ST zum Steuern einer Eisenbahngleisanlage 20 erzeugen lassen. Die Bedieneinrichtung 10 umfasst eine Steuereinrichtung 30, eine Eingabeeinrichtung 40, eine Anzeigeeinrichtung 50 sowie eine Blickerfassungseinrichtung 60. Die Anzeigeeinrichtung 50 stellt den jeweiligen Ist-Zustand der Eisenbahngleisanlage 20 dar.

Die Bedieneinrichtung 10 lässt sich beispielsweise wie folgt betreiben:
Wird mit der Eingabeeinrichtung 40 ein Bedienbefehl B erzeugt, mit dem eine Komponente der Eisenbahngleisanlage 20 umgestellt werden soll, so wird dieser Bedienbefehl B von der Steuereinrichtung 30 ausgewertet. Die Steuereinrichtung 30 weist hierzu beispielsweise eine Recheneinrichtung 31 auf, die mit einem Speicher 32 in Verbindung steht. In dem Speicher 32 ist ein Steuerprogramm SP enthalten, mit dem die Recheneinrichtung 31 programmiert ist, um die Steuerfunktion der Steuereinrichtung 30 zu ermöglichen.

Nachfolgend wird beispielhaft davon ausgegangen, dass der Bedienbefehl B zum Umstellen einer Weiche 21 der Eisenbahngleisanlage 20 erzeugt worden ist.

Die Steuereinrichtung 30 wertet den Bedienbefehl B aus und prüft, ob die Weiche 21 umgestellt werden kann. Ist dies der Fall, so prüft die Steuereinrichtung 30, ob die Blickrichtung der Bedienperson, die an der Eingabeeinrichtung 40 den Bedienbefehl B erzeugt hat, tatsächlich auf den von dem Bedienbefehl B betroffenen Abschnitt 22 der Gleisanlage 20 gerichtet ist. Die Blickrichtung der Bedienperson wird mittels der Blickerfassungseinrichtung 60 erfasst, die ein Blickrichtungssignal R erzeugt und zur Steuereinrichtung 30 übermittelt. Die Steuereinrichtung 30 ist somit in der Lage, die Blickrichtung der Bedienperson auszuwerten und zu prüfen, ob die Blickrichtung tatsächlich auf den vom Bedienbefehl B betroffenen Abschnitt 22 bzw. die Weiche 21 gerichtet ist.

Um der Bedienperson zu zeigen, wohin die erfasste Blickrichtung gemäß dem Blickrichtungssignal R der Blickerfassungseinrichtung 60 gerichtet ist, kann die Steuereinrichtung 30 auf der Anzeigeeinrichtung 50 ein Blickrichtungssymbol RS anzeigen, das die jeweilige Blickrichtung der Bedienperson visualisiert (vgl. Figur 1).

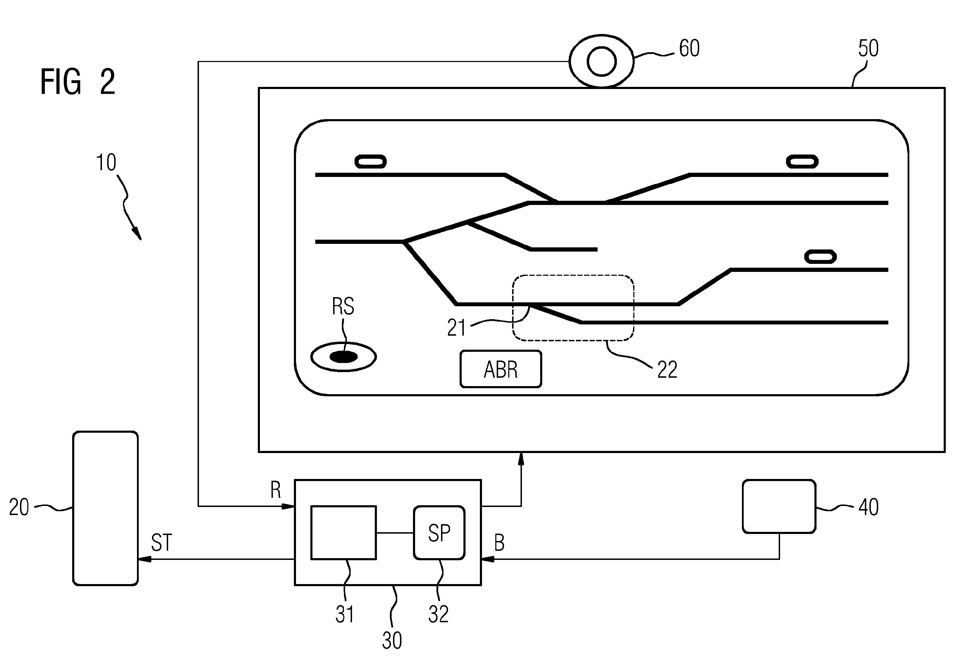

Stellt die Steuereinrichtung 30 fest, dass die Blickrichtung nicht oder nicht ausreichend lange auf den vom Bedienbefehl B betroffenen Abschnitt 22 bzw. die Weiche 21 gerichtet ist oder war, wie dies die Darstellung gemäß Figur 1 zeigt, so wird die Steuereinrichtung 30 nach Ablauf einer vorgegebenen Zeitspanne die Bearbeitung des Bedienbefehls B abbrechen und auf der Anzeigeeinrichtung 50 anzeigen, dass die Annahme bzw. Umsetzung des Bedienbefehls B verweigert wird. Der Abbruch der Umsetzung des Bedienbefehls B kann beispielsweise mittels eines Abbruchanzeigeelements ABR auf der Anzeigeeinrichtung 50 angezeigt werden, wie dies die Figur 2 zeigt.

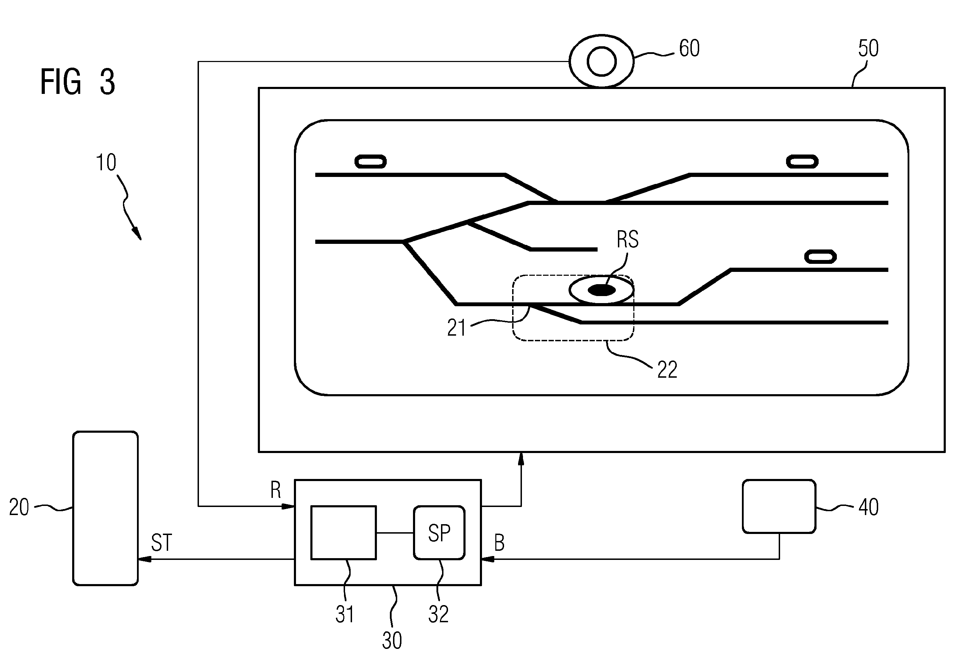

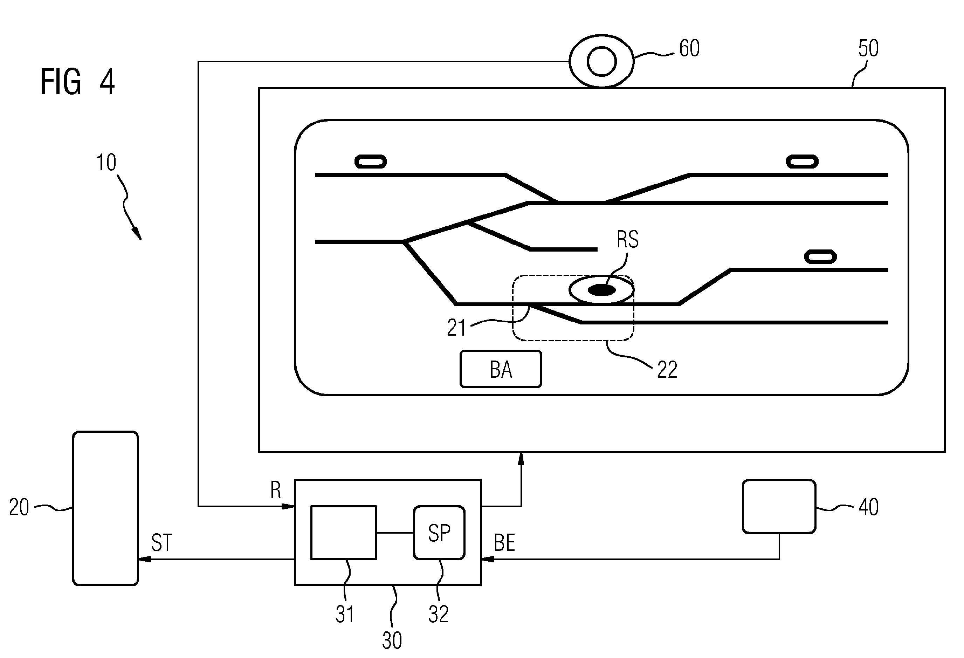

Stellt die Steuereinrichtung 30 hingegen fest, dass die Blickrichtung der Bedienperson tatsächlich auf den betroffenen Abschnitt 22 bzw. die Weiche 21 gerichtet ist (vgl. Figur 3) und die Betrachtungszeitdauer des vom Bedienbefehl B betroffenen Abschnitts 22 eine vorgegebene Mindestzeitdauer erreicht oder überschritten hat, so wird sie auf der Anzeigeeinrichtung 50 eine Bestätigungsaufforderung BA anzeigen (vgl. Figur 4). Mit der Bestätigungsaufforderung BA wird die Bedienperson der Bedieneinrichtung 10 aufgefordert, an der Eingabeeinrichtung 40 eine Bestätigungseingabe BE einzugeben, mit der der Bedienbefehl B bestätigt wird.

Nach Erhalt der Bestätigungseingabe BE innerhalb einer vorgegebenen Zeitspanne wird die Steuereinrichtung 30 den Bedienbefehl B umsetzen und die Weiche 21 umstellen, indem sie ein entsprechendes Steuersignal ST erzeugt und zur Eisenbahngleisanlage 20 übermittelt. Die Umsetzung des Bedienbefehls B kann die Steuereinrichtung 30 davon abhängig machen, dass in der Zeitspanne zwischen der Anzeige der Bestätigungsaufforderung BA und der Bestätigungseingabe BE die Bedienperson den vom Bedienbefehl B betroffenen Abschnitt 22 oder die Weiche 21 für die o. g. vorgegebene Mindestzeitdauer oder eine andere, längere oder kürzere, Mindestzeitdauer anschaut.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Bedieneinrichtung
- 20: Eisenbahngleisanlage
- 21: Weiche
- 22: Abschnitt
- 30: Steuereinrichtung
- 31: Recheneinrichtung
- 32: Speicher
- 40: Eingabeeinrichtung
- 50: Anzeigeeinrichtung
- 60: Blickerfassungseinrichtung

- ABR: Abbruchanzeigeelement
- B: Bedienbefehl
- BA: Bestätigungsaufforderung
- BE: Bestätigungseingabe
- R: Blickrichtungssignal
- RS: Blickrichtungssymbol
- SP: Steuerprogramm
- ST: Steuersignal

## Patentansprüche

1. Verfahren zum Betreiben einer Bedieneinrichtung (10), die eine Eingabe von Bedienbefehlen (B) zur Steuerung einer technischen Anlage, insbesondere einer Eisenbahngleisanlage (20), ermöglicht, wobei
- auf einer Anzeigeeinrichtung (50) der Bedieneinrichtung (10) der Ist-Zustand zumindest eines Abschnitts (22) der technischen Anlage angezeigt wird,
- eingehende bedienerseitige Bedienbefehle (B) zum Umstellen von Komponenten der technischen Anlage bearbeitet werden,
- im Falle eines eingehenden bedienerseitigen Bedienbefehls (B) mit einer Blickerfassungseinrichtung (60) festgestellt wird, ob die Bedienperson vor, während oder nach der Eingabe des Bedienbefehls (B) den vom Bedienbefehl (B) betroffenen Abschnitt (22) der technischen Anlage auf der Anzeigeeinrichtung (50) angeschaut hat oder anschaut, und
- die Erzeugung eines Steuersignals (ST) zur Umsetzung des Bedienbefehls (B) zumindest auch erfordert, dass die Bedienperson den Abschnitt (22) anschaut oder angeschaut hat.
**dadurch gekennzeichnet, dass**
- nach Eingabe des bedienerseitigen Bedienbefehls (B) geprüft wird, ob die Bedienperson den vom Bedienbefehl (B) betroffenen Abschnitt (22) der technischen Anlage anschaut,
- falls dies der Fall ist, eine Bestätigungsaufforderung (BA) erzeugt wird, mit der die Bedienperson zur Bestätigung des Bedienbefehls (B) aufgefordert wird, und
- die Umsetzung des Bedienbefehls (B) zumindest auch erfordert, dass die Bedienperson nach der Bestätigungsaufforderung (BA) den Bedienbefehl (B) bestätigt hat.

2. Verfahren nach Anspruch 1,
**dadurch gekennzeichnet, dass**
die Bestätigungsaufforderung (BA) erst erzeugt wird, wenn die Betrachtungszeitdauer des vom Bedienbefehl (B) betroffenen Abschnitts (22) der technischen Anlage eine vorgegebene Mindestzeitdauer erreicht oder überschritten hat.

3. Verfahren nach einem der voranstehenden Ansprüche,
**dadurch gekennzeichnet, dass**
der von dem Blick der Bedienperson erfasste Abschnitt (22) der Anzeigeeinrichtung (50) mittels eines Blickrichtungssymbols (RS) auf der Anzeigeeinrichtung (50) markiert wird.

4. Verfahren nach einem der voranstehenden Ansprüche,
**dadurch gekennzeichnet, dass**
die Bearbeitung des Bedienbefehls (B) abgebrochen wird, wenn nach Eingabe des bedienerseitigen Bedienbefehls (B) die Bedienperson den vom Bedienbefehl (B) betroffenen Abschnitt (22) der technischen Anlage innerhalb einer vorgegebenen Zeitspanne nicht oder nicht ausreichend lange angeschaut hat.

5. Bedieneinrichtung (10) zur Eingabe von Bedienbefehlen (B) zur Steuerung einer technischen Anlage, insbesondere einer Eisenbahngleisanlage (20), mit
- einer Anzeigeeinrichtung (50), auf der der Ist-Zustand zumindest eines Abschnitts (22) der technischen Anlage angezeigt wird oder anzeigbar ist, und
- einer Eingabeeinrichtung (40), die eine bedienerseitige Eingabe von Bedienbefehlen (B) ermöglicht, und
- einer Steuereinrichtung (30) zum Bearbeiten der Bedienbefehle (B), und
- einer Blickerfassungseinrichtung (60),
**dadurch gekennzeichnet, dass**
die Steuereinrichtung (30), die mit der Blickerfassungseinrichtung (60) in Verbindung steht und von dieser ein die Blickrichtung angebendes Blickrichtungssignal (R) erhält, eine Rechnereinrichtung (31) aufweist, die derart programmiert ist, dass sie
- nach Eingabe des bedienerseitigen Bedienbefehls (B) anhand des Blickrichtungssignals (R) der Blickerfassungseinrichtung (60) prüft, ob die Bedienperson den vom Bedienbefehl (B) betroffenen Abschnitt (22) der technischen Anlage anschaut,
- falls dies der Fall ist, eine Bestätigungsaufforderung (BA) erzeugt, mit der die Bedienperson zur Bestätigung des Bedienbefehls (B) aufgefordert wird und
- ein Steuersignal (ST) zur Umsetzung des Bedienbefehls (B) nur dann erzeugt, wenn die Bedienperson nach der Bestätigungsaufforderung (BA) den Bedienbefehl (B) bestätigt hat.

6. Bedieneinrichtung (10) nach Anspruch 5,
**dadurch gekennzeichnet, dass**
- die Steuereinrichtung (30) das Blickrichtungssignal (R) auswertet und prüft, ob die Bedienperson vor, während oder nach der Eingabe eines Bedienbefehls (B) den vom Bedienbefehl (B) betroffenen Abschnitt (22) der technischen Anlage auf der Anzeigeeinrichtung (50) angeschaut hat oder anschaut.

7. Bedieneinrichtung (10) nach Anspruch 6,
**dadurch gekennzeichnet, dass**
- die Steuereinrichtung (30) die Weiterbearbeitung des Bedienbefehls (B) und/oder die Umsetzung des Bedienbefehls (B) verweigert, wenn sie anhand des Blickrichtungssignals (R) feststellt, dass die Bedienperson den vom Bedienbefehl (B) betroffenen Abschnitt (22) in unzureichendem Maße anschaut oder angeschaut hat.

8. Bedieneinrichtung (10) nach einem der voranstehenden Ansprüche 5-7,
**dadurch gekennzeichnet, dass**
die Steuereinrichtung (30) derart ausgestaltet ist, dass sie den von dem Blick der Bedienperson erfassten Abschnitt (22) der Anzeigeeinrichtung (50) mittels eines Blickrichtungssymbols (RS) auf der Anzeigeeinrichtung (50) markiert.

## Claims

1. Method for actuating an actuating device (10), which permits actuating commands (B) to be input in order to control a technical system, in particular a railway track system (20), wherein
- the actual state of at least one section (22) of the technical system is displayed on a display device (50) of the actuating device (10),
- incoming user-side actuating commands (B) are processed in order to reposition components in the technical system,
- in the case of an incoming user-side actuating command (B), an eye tracking device (60) is used to determine whether the actuating person has looked at or is looking at the section (22) of the technical system affected by the actuating command (B) on the display device (50) during or after input of the actuating command (B) and
- the generation of a control signal (ST) for implementing the actuating command (B) also at least requires the actuating person to look at or have looked at the section (22),
**characterised in that**
- after inputting the user-side actuating command (B), a check is performed to determine whether the actuating person is looking at the section (22) of the technical system affected by the actuating command (B),
- if this is the case, a confirmation request (BA) is generated, with which the actuating person is requested to confirm the actuating command (B), and
- the implementation of the actuating command (B) at least also requires the actuating person to have confirmed the actuating command (B) after the confirmation request (BA).

2. Method according to claim 1,
**characterised in that**
the actuation request (BA) is first generated if the observation period of the section (22) of the technical system affected by the actuating command (B) has reached or exceeded a predetermined minimum period.

3. Method according to one of the preceding claims,
**characterised in that**
the section (22) of the display device (50) registered by the view of the actuating person is marked on the display device (50) by means of a line of sight symbol (RS).

4. Method according to one of the preceding claims,
**characterised in that**
the processing of the actuating command (B) is interrupted if, after inputting the user-side actuating command (B), the actuating person has not looked or not looked for a sufficiently long period of time within a predetermined time interval at the section (22) of the technical system affected by the actuating command (B).

5. Actuating device (10) for inputting actuating commands (B) for controlling a technical system, in particular a railway track system (20), having
- a display device (50) on which the actual state of at least one section (22) of the technical system is displayed or can be displayed, and
- an input device (40), which allows actuating commands (B) to input on the user side and
- a control device (30) for processing the actuating commands (B), and
- an eye tracking device (60),
**characterised in that**
the control device (30), which is connected to the eye tracking device (60) and receives a line of sight signal (R) specifying the line of sight, has a computing device (31), which is programmed such that
- after inputting the user-side actuating command (B) on the basis of the line of signal (R), the eye tracking device (60) checks whether the actuating person is looking at the section (22) of the technical system affected by the actuating command (B),
- if this is the case, generates a confirmation request (BA) with which the actuating person is requested to confirm the actuating command (B) and
- only then generates a control signal (ST) to implement the actuating command (B) if the actuating person has confirmed the actuating command (B) after the confirmation request (BA).

6. Actuating device (10) according to claim 5,
**characterised in that**
- the control device (30) evaluates the line of sight signal (R) and checks whether the actuating person has looked at or is looking at the section (22) of the technical system on the display device (50) affected by the actuating command (B) before, during or after inputting an actuating command (B).

7. Actuating device (10) according to claim 6,
**characterised in that**
- the control device (30) rejects the further processing of the actuating command (B) and/or the implementation of the actuating command (B) if it determines on the basis of the line of sight signal (R) that the actuating person is inadequately looking or has inadequately looked at the section (22) affected by the actuating command (B).

8. Actuating device (10) according to one of the preceding claims 5-7,
**characterised in that**
the control device (30) is embodied such that it marks the section (22) of the display device (50) registered by the view of the actuating person on the display device (50) by means of a line of sight symbol (RS).

## Revendications

1. Procédé pour faire fonctionner un dispositif (10) de commande qui rend possible d'entrer des instructions ( B ) de commande pour la gestion d'une installation technique, notamment d'une installation ( 20 ) de voie de chemin de fer, dans lequel
- on affiche sur un dispositif ( 50 ) d'affichage du dispositif ( 10 ) de commande l'état réel d'au moins une partie ( 22 ) de l'installation technique,
- on traite des instructions ( B ) de commande entrant du côté opérateur pour renverser des éléments de l'installation technique,
- dans le cas d'une instruction ( B ) de commande entrant du côté opérateur, on constate par un dispositif ( 60 ) de détection visuelle, si l'opérateur a regardé ou regarde avant, pendant ou après l'entrée de l'instruction ( B ) de commande, la partie ( 22 ), concernée par l'instruction ( B ) de commande, de l'installation technique et
- la production d'un signal ( ST ) de commande pour la transposition de l'instruction ( B ) de service exige au moins aussi que l'opérateur regarde ou a regardé la partie ( 22 ), **caractérisé en ce que**
- après l'entrée de l'instruction ( B ) de commande du côté opérateur, on contrôle si l'opérateur regarde la partie ( 22 ), concernée par l'instruction ( B ) de commande, de l'installation technique,
- si c'est le cas, on produit une demande ( BA ) de confirmation, par laquelle l'opérateur est invité à confirmer l'instruction ( B ) de commande et
- la transposition de l'instruction ( B ) de commande exige au moins aussi que l'opérateur a, après la demande ( BA ) de confirmation, confirmé l'instruction ( B ) de commande.

2. Procédé suivant la revendication 1,
**caractérisé en ce qu'**
on ne produit l'invitation ( BA ) à confirmer que si la durée d'observation de la partie ( 22 ), concernée par l'instruction ( B ) de commande, de l'installation technique a atteint ou a dépassé une durée minimum donnée à l'avance.

3. Procédé suivant l'une des revendications précédentes,
**caractérisé en ce que**
l'on repère sur le dispositif ( 50 ) d'affichage, au moyen d'un symbole ( RS ) de direction visuelle, la partie ( 22 ), détectée par la vue de l'opérateur, du dispositif ( 50 ) d'affichage.

4. Procédé suivant l'une des revendications précédentes,
**caractérisé en ce que**
l'on interrompt le traitement de l'instruction ( B ) de commande si, après l'entrée de l'instruction ( B ) de commande du côté opérateur, l'opérateur n'a pas regardé ou n'a pas regardé suffisamment longtemps, dans un laps de temps donné à l'avance, la partie ( 22 ), concernée par l'instruction ( B ) de commande, de l'installation technique.

5. Dispositif ( 10 ) de commande pour entrer des instructions ( B ) de commande pour la gestion d'une installation technique, notamment d'une installation ( 20 ) de voie de chemin de fer, comprenant :
- un dispositif ( 50 ) d'affichage sur lequel l'état réel d'au moins une partie ( 22 ) de l'installation technique est affiché ou peut l'être et
- un dispositif ( 40 ) d'entrée qui rend possible une entrée du côté opérateur d'instructions ( B ) de commande et
- un dispositif ( 30 ) de gestion pour traiter les instructions ( B ) de commande et
- un dispositif ( 60 ) de détection visuelle,
**caractérisé en ce que** le dispositif ( 30 ) de gestion, qui est en liaison avec le dispositif ( 60 ) de détection visuelle et qui en reçoit un signal ( R ) de direction visuelle indiquant la direction visuelle à un dispositif ( 31 ) informatique qui est programmé de manière à
- après l'entrée de l'instruction ( B ) de commande du côté opérateur, on contrôle si l'opérateur voit la partie ( 22 ), concernée par l'instruction ( B ) de commande, de l'installation technique,
- si c'est le cas, on produit une demande ( BA ) de confirmation par laquelle l'opérateur est invité à confirmer l'instruction ( B ) de commande et
- la transposition de l'instruction ( B ) de commande exige au moins aussi que l'opérateur a, après la demande ( BA ) de confirmation, confirmé l'instruction ( B ) de commande.

6. Dispositif ( 10 ) de commande suivant la revendication 5, **caractérisé en ce que**
- le dispositif ( 30 ) de gestion exploite le signal ( R ) de direction visuelle et contrôle si l'opérateur a vu ou voit sur le dispositif ( 50 ) d'affichage avant, pendant ou après l'entrée d'une instruction ( B ) de commande, la partie ( 22 ), concernée par l'instruction ( B ) de commande, de l'installation technique.

7. Dispositif ( 10 ) de commande suivant la revendication 6, **caractérisé en ce que**
- le dispositif ( 30 ) de gestion refuse le traitement ultérieur de l'instruction ( B ) de commande et/ou la transposition de l'instruction ( B ) de commande s'il constate, à l'aide du signal ( R ) de direction visuelle, que l'opérateur voit ou a vu, dans une mesure insuffisante, la partie ( 22 ) concernée par l'instruction ( B ) de commande.

8. Dispositif ( 10 ) de commande suivant l'une des revendications précédentes 5 à 7,
**caractérisé en ce que** le dispositif ( 30 ) de gestion est conformé de manière à repérer sur le dispositif ( 50 ) d'affichage au moyen d'un symbole ( RS ) de direction visuelle, la partie ( 22 ), concernée par la vue de l'opérateur, du dispositif ( 50 ) d'affichage.
